# EUROPÄISCHE PATENTSCHRIFT

(11) **EP 1 322 009 B1**
(45) Veröffentlichungstag und Bekanntmachung des Hinweises auf die Patenterteilung: **05.04.2006**
(21) Anmeldenummer: 01130763.4
(22) Anmeldetag: 22.12.2001
(51) Int. Cl.: H02G 1/02, H02G 7/05

(54) **Befestigungsklemme für ein Luftkabel**
Fixing clamp for an overhead cable
Bride de fixation pour un câble aérien

(43) Veröffentlichungstag der Anmeldung: 25.06.2003
(73) Patentinhaber: Richard Bergner Elektroarmaturen GmbH & Co.KG, 91126 Schwabach (DE)
(72) Erfinder: Murr, Manfred, 91522 Ansbach (DE)
(74) Vertreter: Tergau & Pohl Patentanwälte

(56) Entgegenhaltungen:
- DE-U- 29 801 108
- US-A- 5 286 211

## Beschreibung

Die Erfindung betrifft eine Befestigungsklemme für zumindest ein entlang eines Masts geführtes Luftkabel.

Bei einer Freileitung, deren Leiter- und Erdseile zwischen Masten abgespannt sind, werden die Masten oftmals zusätzlich auch zur Aufhängung weiterer Seile oder Kabel herangezogen. Insbesondere sind dies selbst tragende Nachrichtenkabel, die auch als Luftkabel bezeichnet werden. Ein derartiges Luftkabel dient beispielsweise zur Übertragung von Mess- und sonstigen Datensignalen, die beispielsweise stromnetzspezifische Informationen enthalten. Darüber hinaus können die Luftkabel auch externe Daten, beispielsweise Kommunikationsdaten, übertragen.

Aufgrund der herstellungstechnisch bedingten begrenzten Länge des Luftkabels muss dieses über eine Verbindungsmuffe verlängert werden. Dieses geschieht üblicherweise an einem sogenannten Abspannmast. Um zwei Luftkabel in einer Muffe miteinander verbinden zu können, müssen sie entlang des Masts zur Muffe geführt werden. Hierfür sind eine Reihe von Befestigungsklemmen vorgesehen, die am Mast befestigt sind und das Luftkabel führen und halten.

Ein modernes Luftkabel ist in der Regel als Lichtwellenleiter ausgebildet. Da die Datenübertragung auf rein optischem Weg erfolgt, kann ein solcher Lichtwellenleiter auch unmittelbar in ein Leiter- oder Erdseil integriert werden. Hierzu wird beispielsweise ein Draht des Seils durch ein Röhrchen ersetzt, durch das der oder die Lichtwellenleiter geführt ist/sind. Daneben finden als Lichtweitenleiter auch so genannte ADSS-Kabel (All Dielectric Self Supporting Kabel) Verwendung. Diese metallfreien selbst tragenden Luftkabel weisen üblicherweise einen Kunststoffmantel auf, der die einzelnen Glasfasern des Lichtweflenleiters umgibt. Der Kunststoffmantel ist typischerweise mit Verstärkungsfasern versehen, damit das Luftkabel eine ausreichende Zugfestigkeit aufweist. Ein derartiges ADSS-Kabel ist aufgrund des relativ weichen Kunststoffs sehr druckempfindlich gegenüber Querkräften (Radialkräfte). Solche Kräfte wirken über den weichen Kunststoff auf den Lichtwellenleiter ein und bewirken bei diesem eine Erhöhung der optischen Dämpfung. Dadurch kann die Datenübertragung im Luftkabel gestört und sogar unterbrochen werden.

Eine herkömmliche Befestigungsklemme ist aus vielen Einzelteilen zusammengesetzt und umfasst einen Befestigungsbügel zur Befestigung am Mast, wobei in die Stirnseite des Befestigungsbügels eine Schlossschraube eingeschraubt ist. Auf die Schlossschraube werden zwei Klemmteile mit Führungsrillen für das Luftkabel aufgesetzt, die über Muttern gegeneinander verspannbar sind, so dass zwischen den beiden Klemmteilen das Luftkabel eingeklemmt werden kann. Die Führungsrillen weisen dabei einen an den Durchmesser des Luftkabels angepassten Radius auf. Zudem sind elastische Einlagen vorgesehen, um die Druckbelastung des Luftkabels gering zu halten. Die Klemmteile sind dabei typischerweise Blechbiegeteile und der Befestigungsbügel ist ein Schmiede- oder Gussteil. Die Ausbildung einer derartigen herkömmlichen Befestigungsklemme erfordert einen hohen Herstellungs- und Montageaufwand.

Aus der DE 298 01 108 U ist eine Befestigungsklemme für zumindest ein entlang eines Masten geführtes Kabel zu entnehmen. Die Befestigungsklemme umfasst einen Befestigungsbügel, mit dem die Befestigungsklemme am Mast befestigt wird. Am Befestigungsbügel sind mehrere Kabelklemmen vorgesehen. Diese sind als im Wesentlichen parallel zueinander geführte Blechstreifen ausgebildet, die nach Einsetzen eines Kabels an ihren freien Endseiten mittels eines Bügels miteinander verbunden werden und eine Schelle ausbilden.

Der Erfindung liegt die Aufgabe zugrunde, eine herstellungstechnisch einfach auszubildende Befestigungsklemme zu ermöglichen.

Die Aufgabe wird gemäß der Erfindung gelöst mit einer Befestigungsklemme für zumindest ein entlang eines Masts geführtes Luftkabel, wobei die Befestigungsklemme einen Befestigungsbügel zur Befestigung am Mast und eine Kabelklemme zum Festklemmen des Luftkabels zwischen zwei Klemmteilen, die einen in Längsrichtung des Masts orientierten Führungskanal bilden aufweist. Der Befestigungsbügel ist dabei zusammen mit einem der beiden Klemmteile als ein einstückiges Strangpressprofil ausgebildet.

Die Ausgestaltung des Befestigungsbügels zusammen mit einem der beiden Klemmteile als ein einstückiges Strangpressprofil ist sowohl herstellungstechnisch als auch montagetechnisch günstig. Zum einen sind die Herstellungskosten für ein Strangpressprofil im Vergleich zu Guss- oder Schmiedeeisen deutlich geringer. Ein weiterer entscheidender Vorteil ist darin zu sehen, dass möglichst viele Teile der Befestigungsklemme zu einer Baueinheit zusammengefasst sind. Dadurch entfällt die Notwendigkeit einer aufwändigen Montage der einzelnen Teile zur Ausbildung der Befestigungsklemme. Der Montageaufwand und Nachbearbeitungsaufwand ist daher gering gehalten.

Zweckdienlicherweise ist der Befestigungsbügel nach Art eines U-Profils ausgebildet, durch dessen einen U-Schenkel eine Klemmschraube zur Befestigung am Mast geführt ist. Weiterhin ist zugleich einer der beiden U-Schenkel als eines der beiden Klemmteile ausgebildet. Der Befestigungsbügel ist daher multifunktional und übernimmt neben der Befestigung der Klemme am Mast auch noch die Teilfunktion des Einklemmens des Kabels. Dadurch ergibt sich eine kompakte Bauform mit geringem Materialaufwand für die Befestigungsklemme.

Vorzugsweise ist die Befestigungsklemme aus einem zunächst einstückigen Strangpressprofil-Rohling hergestellt, bei dem sowohl die beiden Klemmteile als auch der Befestigungsbügel gemeinsam ein einstückiges Teil bilden. Die beiden Klemmteile sind dabei über eine Solltrennstelle miteinander verbunden. Damit sind in einer vorteilhaften Ausbildung sämtliche wesentlichen Bauteile der Befestigungsklemme in dem einzigen Strangpressprofil verwirklicht. Es brauchen also keine unterschiedlichen Herstellungsschritte zur Ausbildung jedes der beiden Klemmteile sowie des Befestigungsbügels vorgesehen sein.

Um eine möglichst genaue Anpassung des Klemmraums zwischen den beiden Klemmteilen an den Durchmesser des Kabels zu erzielen, ist in einer bevorzugten Ausgestaltung vorgesehen, dass vor dem Trennen der beiden Klemmteile der einstückige Rohling aufgebohrt wird, dass also eine Kabelführung eingebracht wird. Durch die Anpassung des Bohrdurchmessers an den Kabeldurchmesser sind die radialen Anpresskräfte im montierten Endzustand auf das Luftkabel gering gehalten. Zudem ist es problemlos möglich, bei einer als Doppelkfemme ausgeführten Befestigungsklemme unterschiedliche Bohrdurchmesser vorzusehen. Die beiden Klemmteile sind dabei bevorzugt derart ausgebildet, dass sie im Montagezustand flächig aneinander liegen. Dadurch kann selbst bei einer als Doppelklemme ausgeführten Befestigungsklemme nur ein Luftkabel durchgeführt werden, ohne dass die Gefahr eines Verkippens der beiden Klemmteile und somit die Gefahr des Quetschens des Luftkabels besteht. Die notwendige Klemmkraft auf das Luftkabel wird durch Wahl eines geeigneten Bohrdurchmessers erhalten.

Weitere bevorzugte Ausgestaltungen der Befestigungsklemme sind in den Unteransprüchen niedergelegt.

Die Aufgabe wird weiterhin gelöst durch ein Verfahren zum Herstellen einer Befestigungsklemme nach Anspruch 14. Die im Hinblick auf die Befestigungsklemme angeführten Vorteile und bevorzugten Ausgestaltungen sind sinngemäß auch auf das Verfahren übertragbar. Eine vorteilhafte Variante ist im Anspruch 15 niedergelegt.

Ausführungsbeispiele der Erfindung werden im Folgenden anhand der Zeichnung näher erläutert. Es zeigen jeweils in schematischen Darstellungen:
- Fig. 1 bis 4: unterschiedliche Ausführungsformen, bei denen ein Schenkel eines U-förmigen Befestigungsbügels zugleich als ein Klemmteil ausgebildet ist,
- Fig. 5 bis 7: unterschiedliche Ausführungsvarianten mit einem U-förmigen Befestigungsbügel, der einstückig mit einem der Klemmteile ausgebildet ist,
- Fig. 8 und 9: eine Ausführungsvariante, bei der die beiden Klemmteile nach Art einer Klemmgabel miteinander verbunden sind,
- Fig. 10 bis 12: unterschiedliche Ausführungsformen, bei denen das zweite Klemmteil durch den Mast selbst gebildet ist,
- Fig. 13 und 14: eine Ausführungsform, bei der der Befestigungsbügel mit einem der beiden Klemmteile als einstückiges Strangpressprofil und das zweite Klemmteil als ein Blechbiegeteil ausgeführt ist, und
- Fig. 15: eine schematische Darstellung eines Strommast zur Illustration des Einsatzzwecks der Befestigungsklemme.

In den Figuren sind gleich wirkende Teile mit den gleichen Bezugszeichen versehen.

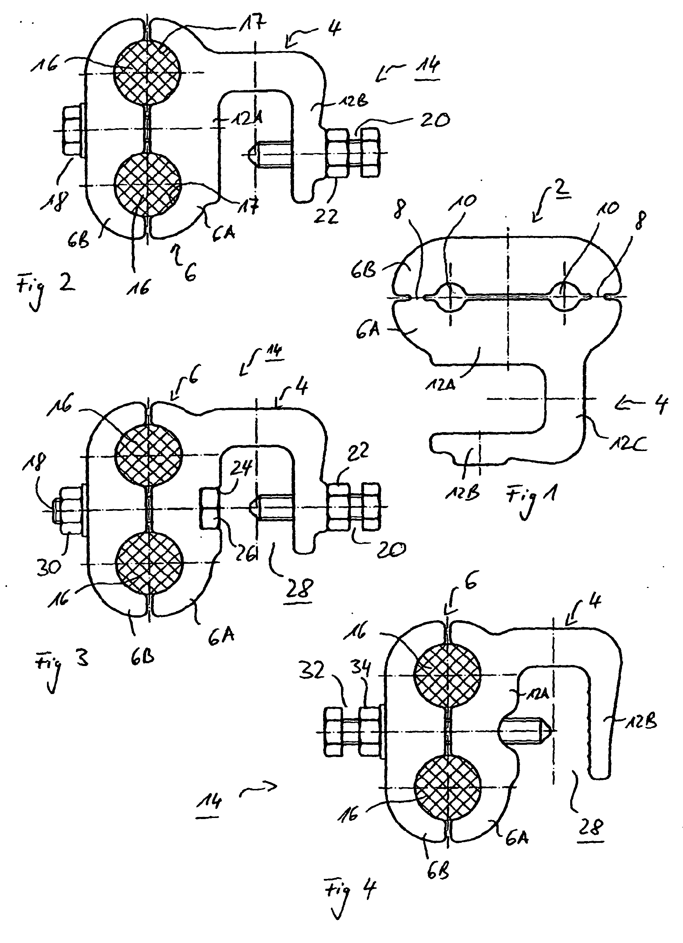

Fig. 1 zeigt einen Strangpressprofil-Rohling 2, bei dem ein Befestigungsbügel 4 sowie zwei Klemmteile 6A,6B einstückig miteinander verbunden sind und eine Baueinheit bilden. Der Rohling 2 ist beispielsweise gebildet durch ein Aluminiumstrangpressprofil. Die beiden Klemmteile 6A.6B sind über Verbindungsstege miteinander verbunden, die Solltrennstellen 8 bilden. Der Rohling 2 weist zwischen den beiden Klemmteilen 6A,6B zwei Durchgangslöcher 10 mit geringem Durchmesser auf, die in einem anschließenden Verfahrensschritt auf einen gewünschten Bohrdurchmesser aufgebohrt werden.

Beim Rohling 2 gemäß dem Ausführungsbeispiel der Fig. 1 ist der Befestigungsbügel 4 im Querschnitt gesehen nach Art eines U-Profils ausgebildet und weist zwei gegenüberliegende U-Schenkel 12A, 12B auf, die über einen Mittelsteg 12C miteinander verbunden sind. Der eine U-Schenkel 12A dient dabei zugleich als das eine Klemmteil 6A.

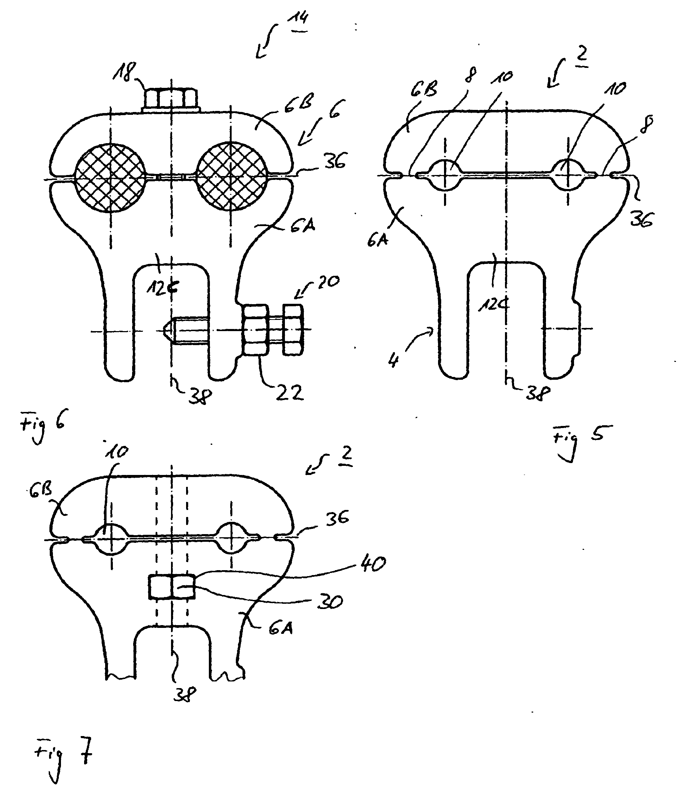

Aus Fig. 2 ist eine endgefertigte Befestigungsklemme 14 zu entnehmen, die als Doppelklemme ausgeführt ist und zwei Luftkabel 16 klemmt. Vom Rohling 2 (siehe Fig. 1) zu der Befestigungsklemme 14 werden folgende Verfahrensschritte ausgeführt: Zunächst werden die Durchgangslöcher 10 aufgebohrt, so dass Führungskanäle 17 mit einem an den Kabeldurchmesser der Luftkabel 16 angepassten Bohrdurchmesser gebildet sind. Anschließend erfolgt die Trennung der beiden Klemmteile 6A,6B an den hierfür vorgesehenen Solltrennstellen 8. In weiteren Verfahrensschritten wird durch das Klemmteil 6B eine Bohrung für eine Spannschraube 18 eingebracht, durch die letztere geschoben werden kann. Ins zweite Klemmteil 6A wird ein Gewinde für die Spannschraube 18 eingeschnitten. Die miteinander verspannbaren Klemmteile 6A,6B bilden eine Kabelklemme 6. Über die Spannschraube 18 können dann die beiden Klemmteile 6A,6B gegeneinander verspannt werden, so dass die beiden Luftkabel 16 in den Führungskanälen 17 festgehalten werden, ohne dass eine Deformation des Luftkabels erfolgt. Im gegeneinander verspannten Zustand liegen die beiden Klemmteile 6a,6B mit ihren Flachseiten annähernd flächig aneinander an. Weiterhin wird in den zweiten U-Schenkel 12B ein Gewinde für eine Klemmschraube 20 eingebracht. In diesem Bereich ist der U-Schenkel 12B verstärkt ausgebildet. Die Klemmschraube 20 dient zum Befestigen des Befestigungsbügels 4 an einem Mast durch Klemmen. Zur Sicherung ist eine Sicherungsmutter 22 vorgesehen.

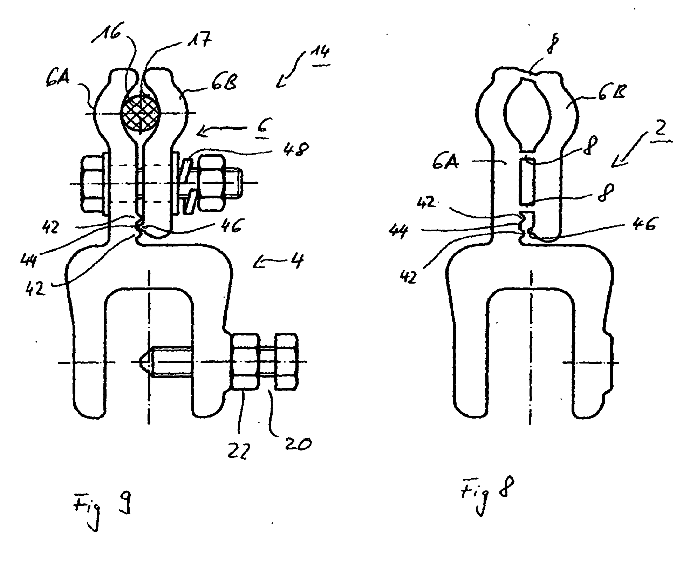

Herstellungstechnisch ist das Gewindeschneiden ein zeitautwändiger und damit kostenintensiver Verfahrensschritt. Daher ist beim abgewandelten Ausführungsbeispiel nach Fig. 3 im Klemmteil 6A eine Aussparung 24 vorgesehen, die an die Schlüsselweite eines Schraubenkopfes 26 der Spannschraube 18 angepasst ist. Die Aussparung 24 ist zu dem vom Befestigungsbügel 4 umschlossenenen Klemmraum 28 offen. Die Spannschraube 20 wird in einfacher Weise von der Seite des Befestigungsbügels 4 her durch eine Bohrung in den beiden Klemmteilen 6A,6B hindurchgeschoben, bis ihr Schraubenkopf 26 in der Aussparung 24 zum Einliegen kommt. Zum Spannen braucht nur noch eine Mutter 30 angezogen werden.

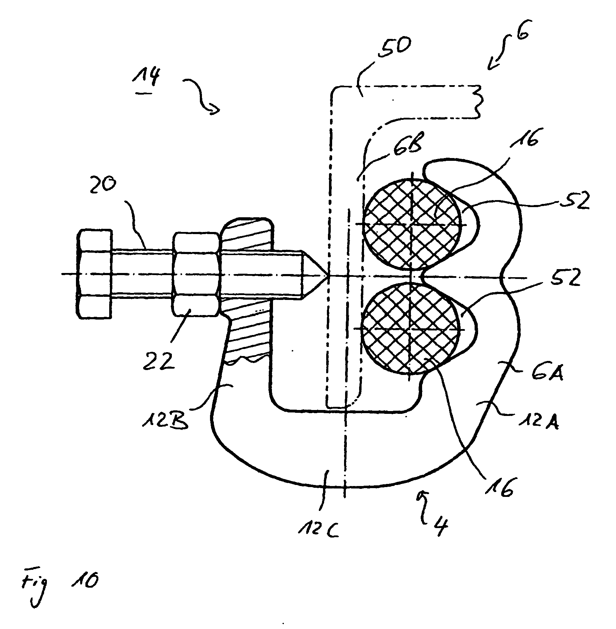

In einer weiteren Variante gemäß Fig. 4 ist nur eine Schraube 32 vorgesehen, die zugleich die Funktion der Spannschraube 18 sowie die der Klemmschraube 20 übernimmt. Und zwar wird die Schraube 32 vollständig durch die beiden Klemmteile 6A,6B hindurchgeführt, so dass sie in den Klemmraum 28 des Befestigungsbügels 4 reicht. Im Klemmteil 6A ist wiederum ein Gewinde eingeschnitten. Dies kann aber in Anlehnung an das Ausführungsbeispiel nach Fig. 3 durch eine Ausnehmung ersetzt sein, in die eine Schraubenmutter eingelegt ist. Das Verklemmen des Befestigungsbügels 4 am Mast erfolgt durch Anziehen der Schraube 32. Zum Verspannen der beiden Klemmteile 6A,6B gegeneinander ist zusätzlich eine Spannmutter 34 vorgesehen, die zugleich als Sicherungsmutter wirkt.

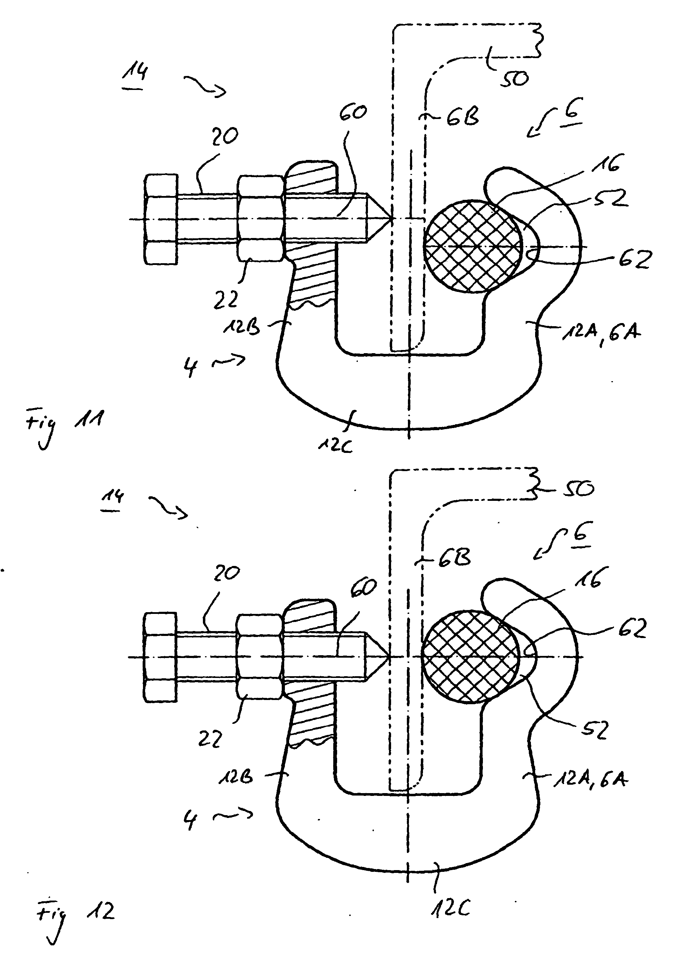

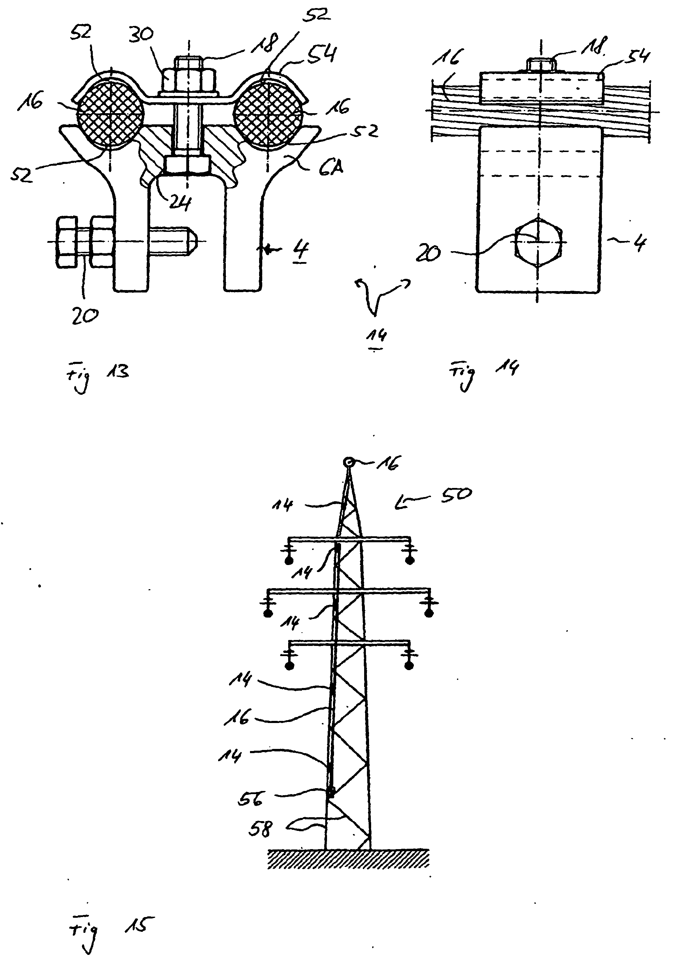

In den Ausführungsbeispielen gemäß den Fig. 5 bis 7 trägt der Befestigungsbügel 4 - im Unterschied zu dem Ausführungsbeispiel nach Fig. 1 bis 4 - als Ganzes das Klemmteil 6A. D.h. das Klemmteil 6A ist die Fortsetzung des Mittelstegs 12C. In diesen Ausführungsbeispielen ist die Teilungsebene 36 der beiden Klemmteile 6A,6B also unter einem rechten Winkel zu der Mittellängsachse 38 des Befestigungsbügels 4 orientiert. Auch bei den Ausführungsbeispielen gemäß den Fig. 5 bis 7 werden in einem ersten Verfahrensschritt Rohlinge 2 (Fig. 5 und 7) von einem Strangpressprofil abgeschnitten. Diese Rohlinge werden anschließend zu einer Befestigungsklemme 14 ausgebildet. Die Befestigungsklemme 14 gemäß Fig. 6 wird dabei aus einem Rohling nach Fig. 5 erhalten.

Das Ausführungsbeispiel der Fig. 7 zeigt einen Rohling 2, bei dem in Abwandlung der zu Fig. 3 erläuterten Aussparung 24 eine Ausnehmung nach Art eines allseitig begrenzten Fensters 40 gebildet ist. Die Fensterabmessung ist dabei wiederum an die Schlüsselweite einer Mutter 30 angepasst. Auch in diesem Ausführungsbeispiel ist daher kein Gewindeschneiden für die Spannschraube 18 (hier nicht dargestellt) notwendig. Die entweder als Aussparung 24 oder als Fenster 40 ausgestaltete Ausnehmung kann natüriich auch im Hinblick auf die Klemmschraube 20 vorgesehen sein, so dass auch für diese in den Befestigungsbügel 4 kein Gewinde eingeschnitten werden braucht.

Eine weitere Ausführungsvariante mit nach Art einer Klemmgabel ausgebildeten Kabelklemme 17 ist in den Fig. 8 und 9 dargestellt, wobei die Fig. 8 den Rohling 2 zeigt. Mit dem Befestigungsbügel 4 ist das Klemmteil 6A einstückig verbunden, welches sich in Richtung der Mittellängsachse 38 erstreckt. Das zweite Klemmteil 6B ist beim Rohling 2 über die Sollbruchstellen 8 mit dem Klemmteil 6A verbunden. Die beiden Klemmteile 6A,6B sind endseitig jeweils nach Art einer Halbschale gestaltet und bilden den Führungskanal 17. An dem Befestigungsbügel 4 gelegenen Ende sind die beiden Klemmteile 6A,6B in einem Lager schwenkbar aneinander gelagert. Das Lager ist dabei gebildet durch zwei am Klemmteil 6A ausgebildete Querstege 42, die einen Zwischenraum 44 zwischen sich einschließen. In diesen greift eine ebenfalls als Quersteg ausgebildete Nase 46 des weiteren Klemmteils 6B in der Montageendstellung ein. Zwischen dem Führungskanal 17 und dem Lager sind die beiden Klemmteile 6A,6B über die Spannschraube 18 miteinander verbunden. Um ein möglichst weiches Einspannen des Luftkabels 16 zu ermöglichen ist bei diesem Ausführungsbeispiel ein Federring 48 vor gesehen. Bei dieser Ausbildung lassen sich die beiden Klemmteile 6A,6B aufgrund ihrer Lagerung V-förmig auseinander bzw. aufeinander zu bewegen, so dass dadurch in einfacher Weise eine Anpassung an unterschiedliche Kabeldurchmesser des Luftkabels 16 eingestellt werden kann. Zum weiteren Schutz des Luftkabels kann - wie auch in allen anderen hier gezeigten Ausführungsvarianten - zwischen dem Luftkabel 16 und den Klemmteilen 6A,6B noch eine zusätzliche elastische Einlage eingelegt sein.

Bei den Ausführungsbeispielen der Fig. 10 bis 12 ist ein Teilausschnitt eines Mastes 50 strichpunktiert dargestellt. Das Teilstück weist im Querschnitt gesehen in etwa L-Form auf, dessen einer Schenkel in den Klemmraum 28 des Befestigungsbügels 4 hineinreicht. Die Besonderheit bei diesen Ausführungsvarianten liegt nun darin, dass der Mast 50 selbst das Klemmteil 6B bildet. Der Mast 50 ist in diesem Ausführungsbeispiel also ein Teilstück der Kabelklemme 16 und damit der Befestigungsklemme 14, die ihre vollständige Ausbildung erst nach erfolgter Montage erfährt. Die aus dem Strangpressprofil bestehende Grundeinheit dieser Befestigungsklemme 4 umfasst den Befestigungsbügel 4, dessen einer U-Schenkel 12A das Klemmteil 6A bildet. Während die Befestigungsklemme 14 nach Fig. 10 als Doppelklemme ausgeführt ist, sind die Befestigungsklemmen nach den Fig. 11 und 12 als Einfachklemmen ausgebildet. Bei allen drei Befestigungsklemmen ist das Klemmteil 6A nach Art einer sich in etwa V-förmig aufweitenden Führungsrille 52 ausgebildet. Da in diesem Ausführungsbeispiel das zweite Klemmteil 6B durch den Mast 50 selbst gebildet ist, ist die sich V-förmig aufweitende Führungsrille 52 für ein möglichst schonendes klemmendes Luftkabel 16 von Vorteil. Denn anders als in den vorhergehenden Ausführungsbeispielen ist eine Anpassung an den Durchmesser des Luftkabels 16 anderweitig nicht gegeben.

Gemäß dem Ausführungsbeispiel nach Fig. 11 ist die Längsachse 60 der Klemmschraube 20 versetzt zu einer Rillenmitte 62 der Führungsrille 52 angeordnet. Eine Verlängerung der Längsachse 60 fluchtet also nicht mit einer durch die Rillenmitte 62 gelegte Normalenachse, sondem verläuft parallel zu dieser und trifft auf die Führungsrille 52 neben der Rillenmitte 62 auf. Durch diese Ausgestaltung wird beim Festziehen der Klemmschraube 20 ein Drehmoment ausgeübt, was insgesamt zu einem etwas weicheren Einspannen des Luftkabels 16 führt.

Bei der Ausführungsvariante nach den Fig. 13 und 14 ist das einstückige Strangpressprofil aus Befestigungsbügel 4 und Klemmteil 6A kombiniert mit einem als Blechbiegeteil 54 ausgebildeten zweiten Klemmteil 6B. Sowohl das Blechbiegeteil 54 als auch das Klemmteil 6A weisen jeweils zwei Führungsrillen 55 für das Kabel 16 auf. Das Verspannen der beiden Klemmteile 6A,6B erfolgt wiederum über eine Spannschraube 18.

Anhand von Fig. 15 wird das typische Einsatzgebiet der Befestigungsklemme 14 erläutert. An dem dargestellten Mast 50 ist das Luftkabel 16 von der Spitze des Mastes 50 zu einer Verbindungsmuffe 56 im Bereich des Mastfußes geführt. Der Mast 50 ist ein Hochspannungsmast mit einem aus Streben 58 gebildeten Metallgerüst. Das Luftkabel 16 ist über mehrere der Befestigungsklemmen 14 an einer der vertikalen Streben 58 befestigt. In der Verbindungsmuffe 56 werden zwei Luftkabel 16 miteinander verbunden. Beide werden in den jeweiligen Befestigungsklemmen 14, die üblicherweise nach Art einer Doppelklemme ausgebildet sind, geführt.

Die hier beschriebene Befestigungsklemme in ihren unterschiedlichen Ausführungsvarianten zeichnet sich dadurch aus, dass sie aus einem Strangpressprofil ausgebildet ist, wobei der Profil-Rohling 2 vorzugsweise sowohl den Befestigungsbügel 4 als auch die beiden Klemmteile 6A,6B einstückig umfasst, also eine Baueinheit bildet. Dadurch ist ein sehr einfaches und kostengünstiges sowie montagefreundliches Herstellen einer Befestigungsklemme ermöglicht. Zudem lässt sich durch Aufbohren passgenau und in einfacher Weise der Führungskanal 17 mit an dem Kabeldurchmesser angepassten Durchmesser einbringen. Dadurch ist die Gefahr einer Beschädigung des Luftkabels 16 vermieden und gleichzeitig eine sichere Befestigung gewährleistet. Im Hinblick auf die Herstellungskosten und den Herstellungsaufwand ist zudem die Anbringung einer Aussparung 24 oder eines Fensters 40 von besonderem Vorteil.

### Bezugszeichenliste

- 2: Rohling
- 4: Befestigungsbügel
- 6: Kabelklemme
- 6A,68: Klemmteile
- 8: Solltrennstelle
- 10: Durchgangsloch
- 12A,12B: U-Schenkel
- 12C: Mittelsteg
- 14: Befestigungsklemme
- 16: Luftkabel
- 17: Führungskanal
- 18: Spannschraube
- 20: Klemmschraube
- 22: Sicherungsmutter
- 24: Aussparung
- 26: Schraubenkopf
- 28: Klemmraum
- 30: Mutter

- 32: Schraube
- 34: Spannmutter
- 36: Teilungsebene
- 38: Mittellängsachse
- 40: Fenster
- 42: Quersteg
- 44: Zwischenraum
- 46: Nase
- 48: Federring
- 50: Mast
- 52: Führungsrille
- 54: Blechbiegeteil
- 55: Fühningsrille
- 56: Verbindungsmuffe
- 58: Streben
- 60: Längsachse
- 62: Rillenmitte

## Patentansprüche

1. Befestigungsklemme (14) für zumindest ein entlang eines Masts (50) geführtes Luftkabel mit einem Befestigungsbügel (4) zur Befestigung am Mast (50) und mit einer Kabelklemme (6) zum Festklemmen des Luftkabets (16) zwischen zwei Klemmteilen (6A,6B), die einen in Längsrichtung des Masts (50) orientierten Führungskanal (17) bilden,
**dadurch gekennzeichnet,**
**dass** der Befestigungsbügel (4) zusammen mit einem der beiden Klemmteile (6A) als ein einstückiges Strangpressprofil ausgebildet ist.

2. Befestigungsklemme (14) nach Anspruch 1,
**dadurch gekennzeichnet,**
**dass** der Befestigungsbügel (4) nach Art eines U-Profils ausgebildet ist, durch dessen einen U-Schenkel (12A,12B) eine Klemmschraube (20) zur Befestigung am Mast (50) geführt ist, und dass einer der beiden U-Schenkel (12A) zugleich als eines der beiden Klemmteile (6A) ausgebildet ist.

3. Befestigungsklemme (14) nach Anspruch 1 oder 2,
**dadurch gekennzeichnet,**
**dass** sie aus einem zunächst einstückigen Strangpressprofil-Rohling (2) hergestellt ist, bei dem die beiden Klemmteile (6A,6B) über eine Solltrennstelle (8) miteinander verbunden sind und zusammen mit dem Befestigungsbügel (4) ein einstückiges Teil bilden.

4. Befestigungsklemme (14) nach Anspruch 3,
**dadurch gekennzeichnet,**
**dass** die beiden Klemmteile (6A,6B) den Führungskanal (17) für das Luftkabel (16) zwischen sich einschließen, der durch Aufbohren des einstückigen Rohlings (2) mit einem an den Kabeldurchmesser angepassten Bohrdurchmesser gebildet ist.

5. Befestigungsklemme (14) nach Anspruch 3 oder 4,
**dadurch gekennzeichnet,**
**dass** die Kabelklemme (6) nach Art einer Klemmgabel ausgebildet ist, bei der die beiden Klemmteile (6A,6B) in einem Lager (42,44,46) aneinander in etwa V-förmig schwenkbar gelagert sind.

6. Befestigungsklemme (14) nach Anspruch 5,
**dadurch gekennzeichnet,**
**dass** das Lager gebildet ist durch zwei voneinander beabstandete und einen Zwischenraum (44) einschtießende Querstege (42) an dem einen Klemmteil (6A) und einer in den Zwischenraum (44) zwischen den Querstegen (42) eingreifenden Nase (46) am zweiten Klemmteil (6B).

7. Befestigungsklemme (14) nach einem der vorhergehenden Ansprüche,
**dadurch gekennzeichnet,**
**dass** eines der Klemmteile (6B) als ein Blechbiegeteil (54) ausgebildet ist.

8. Befestigungsklemme (14) nach einem der vorhergehenden Ansprüche,
**dadurch gekennzeichnet,**
**dass** im Strangpressprofil eine an die Schlüsselweite eines Schraubenkopfes (26) oder einer Mutter (30) angepasste Ausnehmung (24,40) vorgesehen ist.

9. Befestigungsklemme (14) nach Anspruch 8,
**dadurch gekennzeichnet,**
**dass** die Ausnehmung als Fenster (40) ausgeführt ist.

10. Befestigungsklemme (14) nach einem der Ansprüche 2 bis 9,
**dadurch gekennzeichnet,**
**dass** die Klemmschraube (20) zugleich als Spannschraube (18) zum Verspannen der beiden Klemmteile (6A,6B) miteinander vorgesehen ist und hierzu durch die beiden Klemmteile (6A,6B) geführt ist.

11. Befestigungsklemme (14) nach Anspruch 1 oder 2,
**dadurch gekennzeichnet,**
**dass** im montierten Zustand das eine Klemmteil (6A) unter Einschluss des Kabels (16) gegen den als das andere Klemmteil (6B) dienenden Mast (50) gespannt ist.

12. Befestigungsklemme (14) nach Anspruch 11,
**dadurch gekennzeichnet,**
**dass** das eine Klemmteil (6A) eine - im Querschnitt gesehen - sich in etwa V-förmig aufweitende Führungsrille (52) für das Luftkabel (16) aufweist.

13. Befestigungsklemme nach Anspruch 11 oder 12,
**dadurch gekennzeichnet,**
**dass** das eine Klemmteil (6A) eine Führungsrille (52) für das Luftkabel (16) aufweist und dass die Längsachse (60) der Klemmschraube (20) versetzt zu der Rillenmitte (62)verläuft.

14. Verfahren zum Herstellen einer Befestigungsklemme (14) für zumindest ein entlang eines Masts (50) geführtes Luftkabel (16) die einen Befestigungsbügel (4) zur Befestigung am Mast (50) und eine Kabelklemme (6) zum Festklemmen des Luftkabels (16) zwischen zwei Klemmteilen (6A,6B), die einen in Längsrichtung des Masts (50) orientierten Führungskanal (17) bilden aufweist,
**dadurch gekennzeichnet,**
**dass** von einem Strangpressprofil ein einstückiger Strangpressprofil-Rohling (2) abgetrennt wird, der zumindest den Befestigungsbügel (4) und eines der beiden Klemmteile (6A) umfasst und der anschließend weiter behandelt wird.

15. Verfahren nach Anspruch 14,
**dadurch gekennzeichnet,**
**dass** der einstückige Rohling (2) auch das andere Klemmteil (6B) aufweist, dass nach dem Abtrennen des Rohlings (2) zwischen die Klemmteile (6A,6B) als der Führungskanal (17) für das Luftkabel (16) eine Bohrung mit einem an den Kabeldurchmesser des Kabels (16) angepassten Bohrungsdurchmesser eingebracht wird, und dass anschließend die beiden Klemmteile (6A,6B) an einer Solltrennstelle (8) voneinander getrennt werden.

## Claims

1. Fixing clamp (14) for at least one overhead cable, which is guided along a mast (50), having a fixing clip (4) for fixing to the mast (50) and having a cable clamp (6) for the purpose of fixedly clamping the overhead cable (16) between two clamping parts (6A, 6B) which form a guide channel (17) oriented in the longitudinal direction of the mast (50), **characterized in that** the fixing clip (4) is formed, together with one of the two clamping parts (6A), as an integral extruded profile.

2. Fixing clamp (14) according to Claim 1, **characterized in that** the fixing clip (4) is in the form of a U profile, a clamping screw (20) for fixing to the mast (50) being guided through one U limb (12A, 12B) of said U profile, and **in that** one of the two U limbs (12A) is at the same time formed as one of the two clamping parts (6A).

3. Fixing clamp (14) according to Claim 1 or 2, **characterized in that** it is produced from an initially integral extruded-profile blank (2), in the case of which the two clamping parts (6A, 6B) are connected to one another via a desired separation point (8) and form, together with the fixing clip (4), an integral part.

4. Fixing clamp (14) according to Claim 3, **characterized in that** the two clamping parts (6A, 6B) enclose the guide channel (17) for the overhead cable (16) between them, this guide channel (17) being formed with a drilled diameter which matches the cable diameter by means of the integral blank (2) being drilled open.

5. Fixing clamp (14) according to Claim 3 or 4, **characterized in that** the cable clamp (6) is in the form of a clamping fork, in the case of which the two clamping parts (6A, 6B) are mounted in a bearing (42, 44, 46) such that they can pivot against one another, approximately in the form of a V.

6. Fixing clamp (14) according to Claim 5, **characterized in that** the bearing is formed by two transverse webs (42), which are spaced apart from one another and enclose an intermediate space (44), on one clamping part (6A) and a protrusion (46), which engages in the intermediate space (44) between the transverse webs (42), on the second clamping part (6B).

7. Fixing clamp (14) according to one of the preceding claims, **characterized in that** one of the clamping parts (6B) is in the form of a bent sheet-metal part (54).

8. Fixing clamp (14) according to one of the preceding claims, **characterized in that** a cutout (24, 40), which matches the across width of a screw head (26) or a nut (30), is provided in the extruded profile.

9. Fixing clamp (14) according to Claim 8, **characterized in that** the cutout is in the form of a window (40).

10. Fixing clamp (14) according to one of Claims 2 to 9, **characterized in that** the clamping screw (20) is at the same time envisaged as a tightening screw (18) for the purpose of tightening the two clamping parts (6A, 6B) with respect to one another and is guided through the two clamping parts (6A, 6B) for this purpose.

11. Fixing clamp (14) according to Claim 1 or 2, **characterized in that**, in the assembled state, one clamping part (6A) is tensioned with respect to the mast (50) acting as the other clamping part (6B) whilst enclosing the cable (16).

12. Fixing clamp (14) according to Claim 11, **characterized in that** one clamping part (6A) has a guide groove (52), which, when viewed in cross section, opens out approximately in the form of a V, for the overhead cable (16).

13. Fixing clamp according to Claim 11 or 12, **characterized in that** one clamping part (6A) has a guide groove (52) for the overhead cable (16), and **in that** the longitudinal axis (60) of the clamping screw (20) extends with an offset with respect to the groove centre (62).

14. Method for producing a fixing clamp (14) for at least one overhead cable (16) which is guided along a mast (50), said fixing clamp (14) having a fixing clip (4) for fixing to the mast (5) and a cable clamp (6) for the purpose of fixedly clamping the overhead cable (16) between two clamping parts (6A, 6B) which form a guide channel (17) oriented in the longitudinal direction of the mast (50), **characterized in that** an integral extruded-profile blank (2) is separated off from an extruded profile, said blank (2) comprising at least the fixing clip (4) and one of the two clamping parts (6A) and then being treated further.

15. Method according to Claim 14, **characterized in that** the integral blank (2) also has the other clamping part (6B), **in that**, once the blank (2) has been separated off, a drilled hole having a drilled diameter which matches the cable diameter of the cable (16) is introduced between the clamping parts (6A, 6B) as the guide channel (17) for the overhead cable (16), and **in that** the two clamping parts (6A, 6B) are then separated from one another at a desired separation point (8).

## Revendications

1. Bride de fixation (14) pour au moins un câble aérien guidé et mené le long d'un mât (50), comprenant un étrier de fixation (4) pour la fixation au mât (50) et une bride de serrage de câble (6) pour serrer le câble aérien (16) entre deux pièces de bride de serrage (6A, 6B), qui forment un canal de guidage (17) orienté dans la direction longitudinale du mât (50),
**caractérisée en ce que** l'étrier de fixation (4) est réalisé en commun avec l'une des deux pièces de bride de serrage (6A), d'un seul tenant, sous la forme d'un profilé extrudé.

2. Bride de fixation (14) selon la revendication 1, **caractérisée en ce que** l'étrier de fixation (4) est réalisé à la manière d'un profilé en U dont une branche de U (12A, 12B) est traversée par une vis de blocage (20) pour la fixation au mât (50), et **en ce que** l'une des deux branches de U (12A) est réalisée simultanément en tant que l'une des deux pièces de bride de serrage (6A).

3. Bride de fixation (14) selon la revendication 1 ou 2, **caractérisée en ce qu'**elle est fabriquée à partir d'une ébauche de profilé extrudé (2) tout d'abord d'un seul tenant, dans laquelle les deux pièces de bride de serrage (6A, 6B) sont reliées l'une à l'autre par l'intermédiaire d'une zone destinée au sectionnement (8), et forment une seule pièce avec l'étrier de fixation (4).

4. Bride de fixation (14) selon la revendication 3, **caractérisée en ce que** les deux pièces de bride de serrage (6A, 6B) délimitent entre elles le canal de guidage (17) pour le câble aérien (16), qui est formé par perçage de l'ébauche (2) d'un seul tenant, avec un diamètre de perçage adapté au câble.

5. Bride de fixation (14) selon la revendication 3 ou 4, **caractérisée en ce que** la bride de serrage de câble (6) est réalisée à la manière d'une fourchette de serrage dans laquelle les deux pièces de bride de serrage (6A, 6B) sont montées pivotantes l'une par rapport à l'autre sensiblement selon un agencement en forme de V, dans un palier (42, 44, 46).

6. Bride de fixation (14) selon la revendication 5, **caractérisée en ce que** le palier est formé par deux nervures transversales (42) sur l'une des pièces de bride de serrage (6A), qui sont espacées l'une de l'autre et délimitent entre-elles un espace intermédiaire (44), et par un talon (46) sur la deuxième pièce de bride de serrage (6B), qui s'engage dans ledit espace intermédiaire (44) entre lesdites deux nervures transversales (42).

7. Bride de fixation (14) selon l'une des revendications précédentes, **caractérisée en ce que** l'une des pièces de bride de serrage (6B) est réalisée en tant que pièce de tôle pliée (54).

8. Bride de fixation (14) selon l'une des revendications précédentes, **caractérisée en ce que** dans le profilé extrudé est prévu un évidement (24, 40) adapté à la dimension de clé d'une tête de vis (26) ou d'un écrou (30).

9. Bride de fixation (14) selon la revendication 8, **caractérisée en ce que** ledit évidement est réalisé en tant que fenêtre (40).

10. Bride de fixation (14) selon l'une des revendications 2 à 9, **caractérisée en ce que** la vis de blocage (20) est réalisée simultanément en tant que vis de serrage (18) pour serrer mutuellement les deux pièces de bride de serrage (6A, 6B), et traverse à cet effet les deux pièces de bride de serrage (6A, 6B).

11. Bride de fixation (14) selon la revendication 1 ou 2, **caractérisée en ce que** dans l'état monté, une pièce de bride de serrage (6A) est serrée contre le mât (50) formant l'autre pièce de bride serrage (6B), tout en enserrant le câble (16) intercalé.

12. Bride de fixation (14) selon la revendication 11, **caractérisée en ce que** ladite une pièce de bride de serrage (6A) présente une entaille de guidage (52) qui s'élargit sensiblement en forme de V, vue en section transversale, et qui est destinée au câble aérien (16).

13. Bride de fixation selon la revendication 11 ou 12, **caractérisée en ce que** ladite une pièce de bride de serrage (6A) présente une entaille de guidage (52) pour le câble aérien (16), et **en ce que** l'axe longitudinal (60) de la vis de blocage (20) s'étend de manière décalée par rapport au centre (62) de l'entaille.

14. Procédé de fabrication d'une bride de fixation (14) pour au moins un câble aérien (16) guidé et mené le long d'un mât (50), comprenant un étrier de fixation (4) pour la fixation au mât (50) et une bride de serrage de câble (6) pour serrer le câble aérien (16) entre deux pièces de bride de serrage (6A, 6B), qui forment un canal de guidage (17) orienté dans la direction longitudinale du mât (50),
**caractérisé en ce que** l'on sectionne à partir d'un profilé extrudé, une ébauche (2) d'un seul tenant de profilé extrudé, qui englobe au moins l'étrier de fixation (4) et l'une des deux pièces de bride de serrage (6A), et dont on poursuit ensuite la transformation.

15. Procédé selon la revendication 14, **caractérisé en ce que** l'ébauche 2 d'un seul tenant comprend également l'autre pièce de bride de serrage (6B), **en ce qu'**après le sectionnement de l'ébauche (2), on réalise entre les deux pièces de bride de serrage (6A, 6B), pour former ledit canal de guidage (17) pour le câble aérien (16), un perçage d'un diamètre de perçage adapté au diamètre du câble (16), et **en ce que** l'on sépare ensuite les deux pièces de bride de serrage (6A, 6B) au niveau d'une zone destinée au sectionnement (8).
